# EUROPEAN PATENT APPLICATION

(11) **EP 3 734 524 A1**
(43) Date of publication of application: **04.11.2020**
(21) Application number: 20170946.6
(22) Date of filing: 22.04.2020
(51) Int. Cl.: G06Q 10/06

(54) **SYSTEMS AND METHODS FOR AUTOMATICALLY EVALUATING A RE-DISPATCHED FLIGHT DURING VEHICULAR TRAVEL**

(30) Priority: 03.05.2019 US 201916402783
(71) Applicant: Honeywell International Inc., Morris Plains, NJ 07950 (US)
(72) Inventor: ZHONG, Yi, Morris Plains, NJ New Jersey 07950 (US); SHAMASUNDAR, Raghu, Morris Plains, NJ New Jersey 07950 (US); YANG, Yong, Morris Plains, NJ New Jersey 07950 (US); KHAN, Kalimulla, Morris Plains, NJ New Jersey 07950 (US); S, Visakh, Morris Plains, NJ New Jersey 07950 (US)
(74) Representative: BRP Renaud & Partner mbB Rechtsanwälte Patentanwälte Steuerberater

(57) **Abstract**

Disclosed are systems, methods, and non-transitory computer-readable medium for automatic flight re-dispatch evaluation. For example, a system may include a dispatch flight tracker application with a flight management engine service to automatically evaluate one or more flight re-dispatch points by calculating an estimated amount of fuel remaining onboard an aircraft at the one or more flight re-dispatch points using fuel data of the aircraft and flight planning parameters.

## Description

### TECHNICAL FIELD

Various embodiments of the present disclosure generally relate to a connected service-oriented architecture of flight management engine (FME) services, and more particularly, to integrating all necessary processes together to automatically evaluate re-dispatch requests.

### BACKGROUND

The re-dispatch and release is a procedure used to decrease total contingency fuel to be carried by an aircraft. Currently, a flight dispatcher may need to evaluate a re-dispatch flight plan approximately two hours or time defined by airlines policy before the aircraft reaches the re-dispatch point (RDP). During the evaluation, the flight dispatcher may need to manually gather data and confirm the estimated fuel on board (EFOB) at the RDP and the estimated time of arrival (ETA) to the RDP with the flight crew. After the flight dispatcher receives the necessary information from the flight crew, the dispatcher may need to manually calculate the flight plan to see whether the EFOB at the RDP can still satisfy the fuel policy for that flight plan. For a complete re-dispatch procedure, the dispatcher may need to switch between different systems and tools, which may be time-consuming and error-prone. The present disclosure is directed to overcoming one or more of these issues.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF DISCLOSURE

According to certain aspects of the disclosure, systems and methods are disclosed to integrate all necessary processes to provide a flight dispatcher with an auto re-dispatch evaluation function.

In one embodiment, a computer-implemented method is disclosed for flight re-dispatch evaluation. The computer-implemented method may comprise: receiving by a processor, fuel data of an aircraft; receiving, by the processor, flight planning parameters from an operator at a remote device; calculating, by the processor, an estimate of an amount of fuel that will be remaining on board the aircraft when the aircraft arrives at a specified location of its flight path, the calculating being performed prior to the aircraft arriving at the specified location and by using the received fuel data of the aircraft; determining, by the processor, based on the received flight planning parameters, whether the calculated estimate of fuel on board the aircraft is sufficient for travel to a destination location separate from the specified location; and transmitting, by the processor, the determination of the fuel sufficiency to a display operated by the operator at the remote device.

In accordance with another embodiment, a computer-implemented system is disclosed for flight re-dispatch evaluation. The computer-implemented system may comprise: a memory having processor-readable instructions stored therein; and at least one processor configured to access the memory and execute the processor-readable instructions, which when executed by the at least one processor configure the at least one processor to perform: receiving fuel data of an aircraft; receiving flight planning parameters from an operator at a remote device; calculating an estimate of an amount of fuel that will be remaining on board the aircraft when the aircraft arrives at a specified location of its flight path, the calculating being performed prior to the aircraft arriving at the specified location and by using the received fuel data of the aircraft; determining based on the received flight planning parameters, whether the calculated estimate of fuel on board the aircraft is sufficient for travel to a destination location separate from the specified location; and transmitting the determination of the fuel sufficiency to a display operated by the operator at the remote device.

In accordance with another embodiment, a non-transitory computer-readable medium for a flight re-dispatch evaluation, the non-transitory computer-readable medium storing instruction that, when executed by at least one processor, configure the at least one processor to perform. The non-transitory computer readable medium may comprise instructions for: receiving, by a processor, fuel data of an aircraft; receiving, by the processor, flight planning parameters from an operator at a remote device; calculating, by the processor, an estimate of an amount of fuel that will be remaining on board the aircraft when the aircraft arrives at a specified location of its flight path, the calculating being performed prior to the aircraft arriving at the specified location and by using the received fuel data of the aircraft; determining, by the processor, based on the received flight planning parameters, whether the calculated estimate of fuel on board the aircraft is sufficient for travel to a destination location separate from the specified location; and transmitting, by the processor, the determination of the fuel sufficiency to a display operated by the operator at the remote device.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an overview of an exemplary re-dispatch evaluation environment, according to one aspect of the present disclosure.
FIG. 2 depicts a flowchart of an exemplary method for evaluating a re-dispatch point, according to one aspect of the present disclosure.
FIG. 3 depicts an exemplary user interface that may be used by a dispatcher to evaluate a re-dispatch point, according to one aspect of the present disclosure.
FIG. 4 depicts another exemplary user interface that may be used by a dispatcher to evaluate re-dispatch point, according to one aspect of the present disclosure.
FIG. 5 depicts an exemplary computer device or system, in which embodiments of the present disclosure, or portions thereof, may be implemented.

### DETAILED DESCRIPTION OF EMBODIMENTS

As described above, the re-dispatch rerelease is a procedure used to decrease total contingency fuel to be carried by splitting a flight plan into two different calculations. The first calculation may be from a departure airport to an intermediate airport, or an initial destination, that is closer than a planned destination airport, or a final destination. The second calculation may be from a decision point, or a re-dispatch point (RDP) on the route of the flight to the final destination. Each calculation may require contingency fuel over the entire distance of travel, but each segment is less than the total that would be required for the entire flight from the departure airport to the planned destination airport. The actual flight must carry the greater of the contingency fuels for the two calculations. The flight may be re-dispatched prior to the aircraft reaching the RDP after ensuring that there is sufficient fuel per regulations to fly from the RDP to the final destination. If the fuel is deemed to be insufficient at the RDP, the aircraft must land at the initial destination. Reduction of the contingency fuel with this procedure may increase the payload or reduce the fuel burn (due to reduced weight) of the flight.

As an example, regulations may require that airlines carry a 10% trip fuel reserve, or contingency fuel. Therefore, for a flight that travels 10 hours, the aircraft may be required to carry a 1 hour contingency fuel. With re-dispatch, the aircraft may first file a flight plan to an intermediate location that may be 7 hours away. With the 10% destination flight fuel reserve requirement, the aircraft may be required to carry a 0.7 hours contingency fuel. The second leg of the flight plan may be from the RDP to the destination location, which now could be 3 hours way. The 10% destination flight fuel reserve may now mean the aircraft may be required to carry a 0.3 hours contingency fuel. The required fuel on board at origin airport should be the larger one from the two results. As it can be seen, both of these calculations are less than the fuel reserve required without re-dispatch, and both of these calculations meet the fuel policy. Therefore, with re-dispatch, the aircraft may be able to carry up to 70% less in contingency fuel, which can be used to increase the payload of the aircraft and/or reduce the fuel burn.

Airliners currently define their fuel policy based on the airline policy and regulatory policy, therefore fuel policy may be critical for airliners. Currently however, there is no mechanism that allows the dispatcher to evaluate the RDP based on real-time flight information. The activity of evaluating the RDP may be overwhelming to the dispatcher, due to the need to monitor and evaluate manually each of a plurality of aircraft operating states.

Therefore, a need exists for methods and systems to automatically evaluate the RDP in real-time based on real-time aircraft parameters. Using the systems and methods disclosed in the present disclosure, fuel availability at RDPs may be predicted accurately and promptly, and also in an automated manner, based on the desired flight plan to the final destination and accounting for the airline policy and contingency planning. The disclosed techniques may help significantly reduce the time and effort needed for a dispatcher to evaluate a re-dispatch from an estimated 32 minutes down to an estimated 6 to 10 minutes.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiments). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The term "or" is meant to be inclusive and means either, any, several, or all of the listed items. The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. Relative terms, such as, "substantially" and "generally," are used to indicate a possible variation of ± 10% of a stated or understood value.

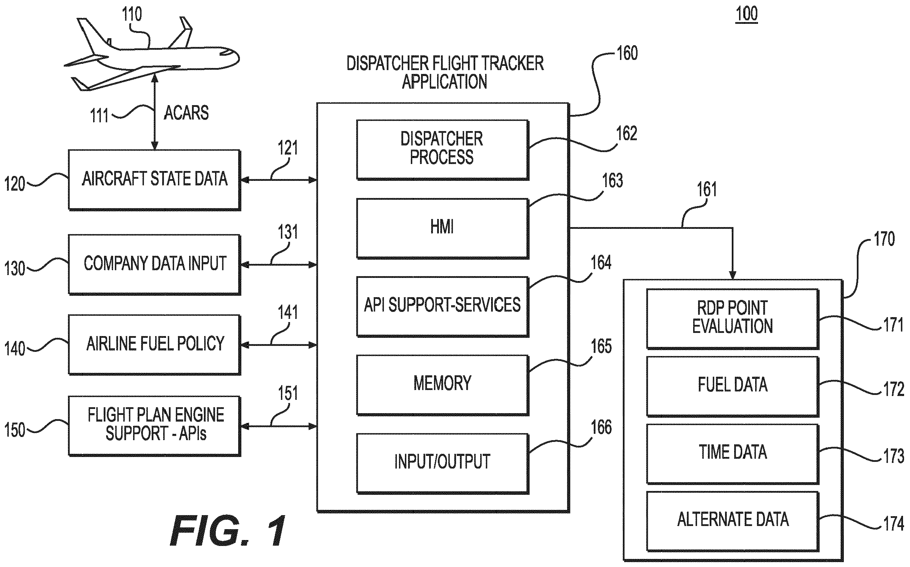

Referring now to the appended drawings, FIG. 1 shows an overview of an exemplary re-dispatch evaluation environment 100, according to one aspect of the present disclosure. The environment 100 may, for example, comprise an aircraft 110, aircraft state data database 120, a company data input database 130, an airline fuel policy database 140, several flight plan engine support Application Programming Interface (API)s 150, a dispatcher flight tracker application 160, and an evaluation decision dataset 170. The aircraft 110 may communicate with aircraft state data database 120 via the aircraft communications addressing and reporting system (ACARS) 111. The aircraft state data database 120, company data input database 130, airline fuel policy database 140 and flight plan engine support APIs 150 may communicate with the dispatcher flight tracker application 160 via communication links 121, 131, 141, and 151 respectively. The aircraft state data database 120 may include at least, the aircraft fuel usage data, aircraft fuel flow rate, and aircraft fuel remaining on board.

As shown in FIG. 1, the dispatcher flight tracker application 160 may, for example, include a dispatcher process 162, a human machine interface (HMI) 163, API support services 164, a memory 165, and an input/output 166. The evaluation decision dataset 170 may, for example, include an RDP point evaluation 171, fuel data 172, time data 173, and alternate data 174. As further shown in FIG. 1, the dispatch flight tracker application 160 may output the evaluation decision dataset 170 via communication link 161. In one embodiment, the dispatcher flight tracker application 160 may be located at a remote location separate from the aircraft and may be operated by a dispatcher, i.e. a dispatch center. In another embodiment, the dispatcher flight tracker application 160 may be located at a wireless device onboard the aircraft, i.e. an electronic flight bag (EFB), or a personal electronic device (PED), operated by the crew on the aircraft. The EFB/PED may include a communication and/or computing device, such as a mobile phone (e.g., a smart phone, a radiotelephone, etc.), a computer (e.g., a desktop computer, a laptop computer, a tablet computer, a handheld computer), a gaming device, a wearable communication device (e.g., a smart wristwatch, a pair of smart eyeglasses, etc.), or a similar type of device.

An exemplary operation of environment 100 when a re-dispatch process has been requested will be described herein. The aircraft 110 may transmit aircraft data via ACARS 111 to aircraft state data database 120. The dispatcher flight tracker application 160 may receive input data from the aircraft state data database 120, company data input database 130, airline fuel policy database 140, and flight plan engine support database 150 via communications links 121, 131, 141 and 151 respectively. The input of data can be performed automatically or as requested by the dispatcher using the HMI 163. The API support services 164 may provide the dispatcher flight tracker application 160 support to receive data from the flight engine support database 150. Memory 165 and input/out 166 are components of the dispatcher flight tracker application 160 and may assists the application 160 with storing instructions on how to process the data inputs, while the input/out 166 may provide the ability for the application 160 to receive data from the databases 120, 130, 140 and 150 and may provide output to the evaluation dataset 170. Memory 165 may be for example, random access memory (RAM), a read-only memory (ROM), a hard disk drive or a removable storage drive. Such a removable storage drive may comprise, for example, a floppy disk drive, a magnetic tape drive, an optical disk drive, a flash memory, or the like. Input/output 166 may connect with input and output devices such as keyboards, mice, touchscreens, monitors, displays, etc. The dispatcher process 162 may perform the evaluation using all the received data and then output the determination via communications link 161 to evaluation decision dataset 170. The evaluation output may include display information for the RDP point evaluation 171, fuel data information 172 which may include fuel usage, fuel flow, and estimated fuel on board at various locations, time data information 173 which may include estimated time of departure, estimated time of arrival, and estimate time enroute, and alternate data 174 which may include display information for eligible alternate airports for re-dispatch.

As indicated above, FIG. 1 is provided merely as an example. Other examples are possible and may differ from what was described with regard to FIG. 1. The number and arrangement of devices and networks shown in FIG. 1 are provided as an example. In practice, there may be additional devices, fewer devices and/or networks, different devices and/or networks, or differently arranged devices and/or networks than those shown in FIG. 1. Furthermore, two or more devices shown in FIG. 1 (the dispatcher flight tracker application 160, and the evaluation decision 170) may be implemented within a single device, or a single device shown in FIG. 1 (e.g., the dispatcher flight tracker application 160, and the evaluation decision 170) may be implemented as multiple, distributed devices. Additionally, or alternatively, a set of devices (e.g., one or more devices) of environment 100 may perform one or more functions described as being performed by another set of devices of environment 100.

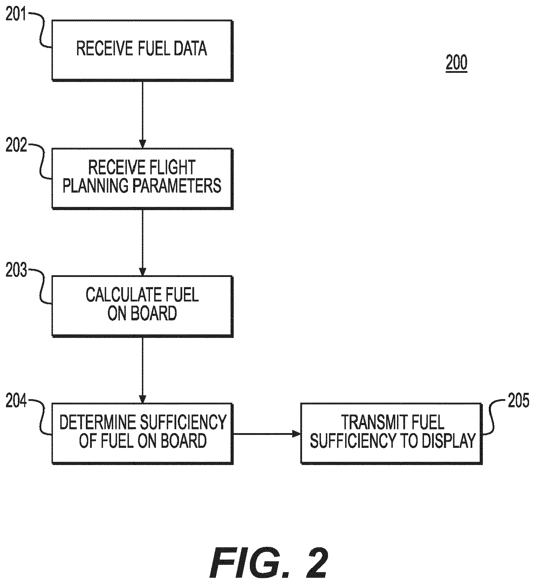

FIG. 2 depicts a flowchart of an exemplary method 200 for evaluating a re-dispatch point, according to one aspect of the present disclosure. Notably, the method 200 may be performed by the dispatcher flight tracker application 160 shown in FIG. 1.

First, at step 201, the exemplary method 200 may begin with receiving fuel data of an aircraft 110. The fuel data may be received via ACARS communication link 111. Next, at step 202, flight planning parameters may be received from company data input 130, airline fuel policy 140, and flight plan engine support 150. At step 203, an estimate amount of fuel onboard at a re-dispatch point may be calculated based on the received fuel data and/or flight planning parameters. At step 204, the sufficiency of the estimated amount of fuel onboard to reach final destination from the re-dispatch point may be determined based on the received fuel data and/or flight planning parameters. At step 205, the determined fuel sufficiency is transmitted to a display as part of the evaluation decision 170 data set.

Although FIG. 2 shows example blocks, in some implementations, method 200 may include additional blocks, fewer blocks, different blocks, or differently arranged blocks than those depicted in FIG. 2. Additionally, or alternatively, two or more of the blocks of the method 200 may be performed in parallel.

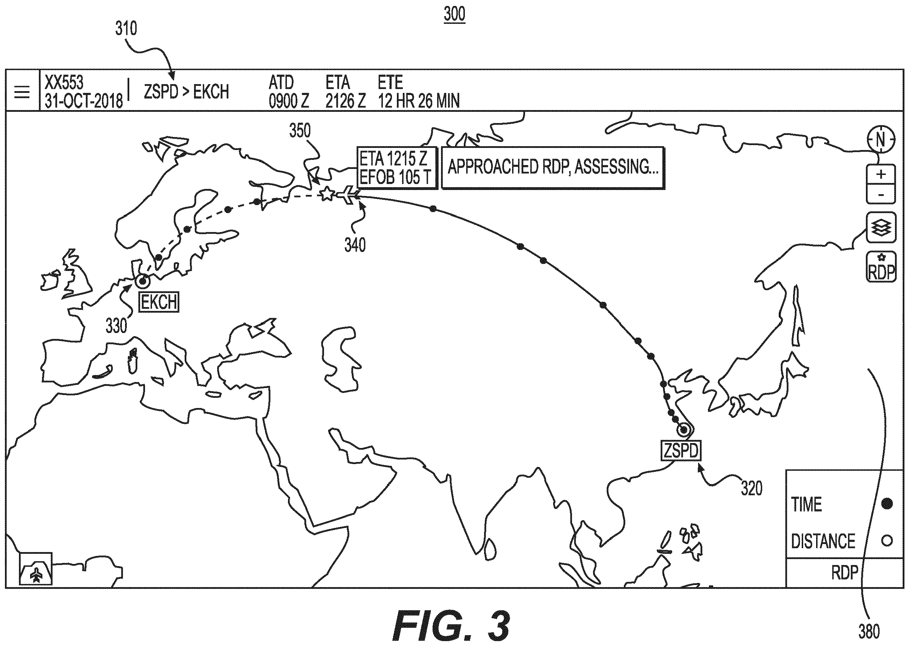

FIG. 3 depicts an exemplary user interface 300 that may be used by a dispatcher to evaluate a re-dispatch point, according to one aspect of the present disclosure.

User interface 300 may include a title bar section 310, a map browser section 380 indicating an aircraft origination airport 320, an aircraft destination airport 330, an aircraft 340, and a re-dispatch point 350. The title bar section 310 may include information elements such a flight number, a date, departure and arrival airports, an actual time of departure (ATD), an estimated time of arrival (ETA), and an estimate time en-route (ETE). In FIG. 3, the user interface 300 is shown to display data regarding flight XX553 on October 31, 2018, which is traveling from Shanghai Pudong International Airport (ZSPD) to Copenhagen Airport (EKCH). The flight departed at 0900Z and will arrive at approximately 2126Z, based on 12 hours and 26 minutes estimated en-route time. User interface 300 further displays that the aircraft 340 has approached the re-dispatch point and an evaluation is being performed to determine if the aircraft 340 has enough fuel to reach the destination airport.

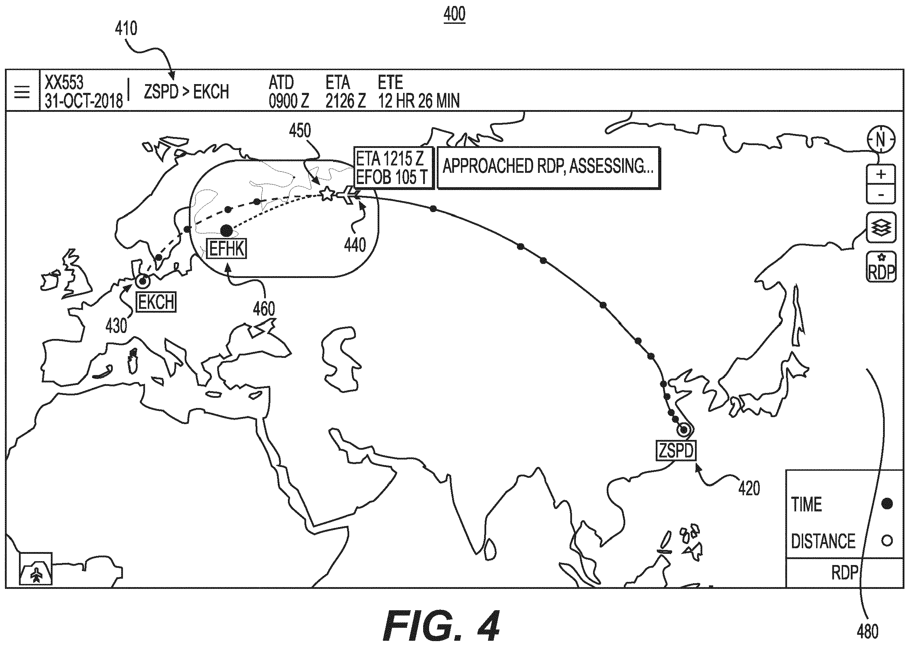

FIG. 4 depicts an exemplary user interface 400 that may be used by a dispatcher to evaluate a re-dispatch point, according to one aspect of the present disclosure. More particularly, the user interface 400 depicts a user interface that has progressed from the user interface 300 of FIG. 3, and that displays an initial/intermediate destination at which the aircraft may land in the event of fuel shortage.

User interface 400 may include the title bar section 410, map browser section 480, aircraft origination airport 420, aircraft destination airport 430, aircraft 440, re-dispatch point 450, and intermediate airport 460. The title bar section 410 may include information elements such flight number, date, departure and arrival airport, actual time of departure (ATD), estimated time of arrival (ETA), and estimate time enroute (ETE). In the exemplary FIG. 4 the user interface is displaying data regarding flight XX553 on October 31, 2018, which is traveling from Shanghai Pudong International Airport (ZSPD) to Copenhagen Airport (EKCH). The flight departed at 0900Z and will arrive at approximately 2126Z, based on 12 hours and 26 minutes estimated en-route time. In FIG. 4, the user interface 400 further displays that the aircraft 440 (which is the same aircraft as the aircraft 340 in FIG. 3) has approached the re-dispatch point and an evaluation has been performed to determine that aircraft 440 does not have enough fuel onboard to reach the destination airport and must be diverted to land at the intermediate airport 460, Helsinki Airport (EFHK), to refuel.

In one exemplary embodiment, re-dispatch evaluation may be performed by the dispatch flight tracker application 160 automatically without dispatcher intervention. In order for the dispatch flight tracker application 160 to evaluate the RDP, several factors may need to be considered by the dispatch flight tracker application 160. For example, the dispatch flight tracker application 160 may need to be configured so that the dispatcher is able to select the minimum time, minimum distance or position to evaluate the RDP and any final destination requirements. The dispatch flight tracker application 160 may also need to take into account any geopolitical reasons that might prevent selection of certain intermediate airports in situations where the aircraft does not have enough fuel onboard to arrive at the destination airport. Other factors to be considered may include traffic-related re-routes and level clearance in a busy airspace, airport and runway restrictions at intermediate airports, weather forecast at the initial destination, final destination and any alternatives, and fuel policy of the airline or any governing body.

The operation of the dispatch flight tracker application 160 will now be described with reference to FIG. 3 and FIG. 4. The dispatch flight tracker application 160 may receive aircraft state data 120, company data input 130, airline fuel policy 140, and flight plan engine support 150. The dispatch flight tracker application 160 may then perform calculation to precisely predict the fuel on board (EFOB) at the RDP and the estimated time of arrival (ETA) to the RDP. The dispatch flight tracker application 160 may also calculate the required fuel based on the pre-defined route in the flight plan according to the airline's fuel policy. Once the evaluation is completed, the flight tracker application 160 may deliver the result to a display operated by the dispatcher. If it is determined by the evaluation that the aircraft has enough fuel onboard to land at the destination airport, then the display may inform the dispatcher to release the aircraft. If it is determined by the evaluation that the aircraft does not have enough fuel onboard to land at the destination airport, then the display may inform the dispatcher that the aircraft has a fuel shortage and the dispatch flight tracker application 160 may determine an intermediate airport, according to the airline and/or geopolitical policy, that the aircraft can safely reach with the amount of fuel onboard. The dispatcher may then release the aircraft to the intermediate airport to refuel.

Although the exemplary embodiment is discussed with only one RDP, it should be noted that, in other embodiments, multiple RDPs may be required. If multiple RDPs exist in the aircraft's flight plan, the re-dispatch evaluation may be performed at every RDP to determine if there is enough fuel onboard to continue to the destination airport.

Although FIG. 3 and FIG. 4 show an exemplary user interface, in some implementations, interfaces 300 and 400 may include additional user interface elements, fewer user interface elements, different user interface elements, or differently arranged user interface elements than those depicted in FIG. 3 and FIG.4.

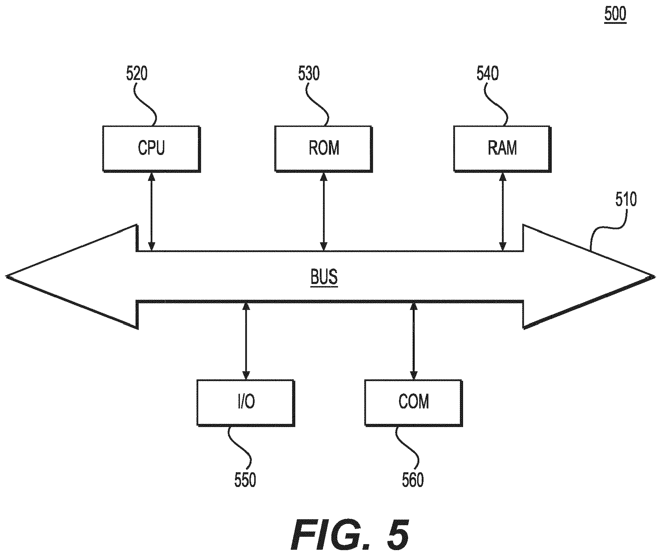

FIG. 5 depicts a high-level functional block diagram of an exemplary computer device or system, in which embodiments of the present disclosure, or portions thereof, may be implemented, e.g., as computer-readable code. In some implementations, the dispatcher flight tracker application (depicted in FIG. 1) may be implemented with device 500. Additionally, each of the exemplary computer servers, databases, user interfaces, modules, and methods described above with respect to FIGs. 1-4 can be implemented in device 500 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGs. 1-4.

If programmable logic is used, such logic may be executed on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device.

For instance, at least one processor device and a memory may be used to implement the above-described embodiments. A processor device may be a single processor or a plurality of processors, or combinations thereof. Processor devices may have one or more processor "cores."

Various embodiments of the present disclosure, as described above in the examples of FIGs. 1-4, may be implemented using device 500. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

As shown in FIG. 5, device 500 may include a central processing unit (CPU) 520. CPU 520 may be any type of processor device including, for example, any type of microprocessor device. As will be appreciated by persons skilled in the relevant art, CPU 520 also may be a single processor in a multi-core/multiprocessor system, such system operating alone, or in a cluster of computing devices operating in a cluster or server farm. CPU 520 may be connected to a data communication infrastructure 510, for example, a bus, message queue, network, or multi-core message-passing scheme.

Device 500 also may include a main memory 540, for example, random access memory (RAM), and also may include a secondary memory 530. Secondary memory 530, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 530 may include other similar means for allowing computer programs or other instructions to be loaded into device 500. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 500.

Device 500 also may include a communications interface ("COM") 560. Communications interface 560 allows software and data to be transferred between device 500 and external devices. Communications interface 560 may include a modem, a network interface (such as an Ethernet card), a communications port, a PCMCIA slot and card, or the like. Software and data transferred via communications interface 560 may be in the form of signals, which may be electronic, electromagnetic, optical, or other signals capable of being received by communications interface 560. These signals may be provided to communications interface 560 via a communications path of device 500, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 500 also may include input and output ports 550 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope and spirit of the disclosure being indicated by the following claims.

## Claims

1. A computer implemented method for a flight re-dispatch evaluation, the method comprising:
receiving, by a processor, fuel data of an aircraft;
receiving, by the processor, flight planning parameters from an operator at a remote device;
calculating, by the processor and based on the received fuel data of the aircraft, an estimated amount of fuel that will be remaining onboard the aircraft when the aircraft arrives at a specified location along a flight path associated with the aircraft, the calculating being performed prior to the aircraft arriving at the specified location;
determining, by the processor and based on the received flight planning parameters, whether the calculated estimated amount of fuel onboard the aircraft is sufficient for travel to a destination location separate from the specified location; and
transmitting, by the processor, the determination of the fuel sufficiency to a display operated by the operator at the remote device.

2. The method of claim 1, wherein the fuel data of the aircraft comprises fuel usage data of the aircraft.

3. The method of claim 1, wherein the fuel data of the aircraft comprises fuel flow rate of the aircraft.

4. The method of claim 1, wherein the fuel data of the aircraft comprises an amount of fuel remaining on the aircraft.

5. The method of claim 1, wherein the remote device is remotely located from the aircraft.

6. The method of claim 1, wherein the remote device comprises a wireless device onboard the aircraft.

7. The method of claim 1, wherein the calculating the estimated amount of fuel that will be remaining onboard the aircraft is performed for a plurality of specified locations along the flight path associated with the aircraft, each of the plurality of specified locations located separately from the destination location.
